Europäisches Patentamt

European Patent Office

Office européen des brevets

(19)

(11) Numéro de publication: **0 307 332**
**A2**

(12)

# DEMANDE DE BREVET EUROPEEN

(21) Numéro de dépôt: **88430024.5**

(51) Int. Cl.⁴: **G 01 N 27/26**

(22) Date de dépôt: **02.09.88**

(30) Priorité: **07.09.87 FR 8712470**

(43) Date de publication de la demande:
**15.03.89 Bulletin 89/11**

(84) Etats contractants désignés:
**AT BE CH DE ES FR GB GR IT LI LU NL SE**

(71) Demandeur: **ARI S.A. Société Anonyme dite:**
**24 G, rue des Catalans**
**F-13007 Marseille (FR)**

(72) Inventeur: **Jordan, Bertrand**
**39, rue de Lodi**
**F-13006 Marseille (FR)**

**Emelina, Richard**
**18, Traverse Saint André**
**F-13008 Marseille (FR)**

**Cagna, Alain**
**8, rue de Chabril**
**F-69110 Sainte Foy Les Lyon (FR)**

**Lauguin, Guy**
**24, rue Joliot Curie**
**F-13470 Carnoux-en-Provence (FR)**

(74) Mandataire: **Azais, Henri et al**
**c/o CABINET BEAU DE LOMENIE 14, rue Raphael**
**F-13008 Marseille (FR)**

(54) **Procédé et dispositif pour l'électrophorèse des macromolécules de grandes dimensions.**

(57) Procédé d'électrophorèse pour la séparation de macromolécules de grandes dimensions.

Ce procédé consiste à soumettre les macromolécules à l'action d'un champ électrique uniforme généré alternativement dans au moins deux directions différentes par des électrodes multiples alimentées en courant électrique d'intensité fixe, disposées à intervalles égaux selon le contour d'un polygone régulier dans la zone centrale duquel se trouve placé l'échantillon de produit.

FIG.1

EP 0 307 332 A2

# Description

## Procédé et dispositif pour l'électrophorèse des macromolécules de grandes dimensions.

La présente invention a pour objet un procédé et un dispositif pour la séparation par électrophorèse de macromolécules de grandes dimensions.

L'électrophorèse est une technique largement utilisée pour l'analyse qualitative, ainsi que pour la séparation et la purification de macromolécules telles que les protéines et les acides nucléiques. Elle consiste à soumettre les macromolécules incorporées à un gel convenable à l'action d'un champ électrique généré par des électrodes, qui provoque la migration des micelles vers ces électrodes.

La plupart des techniques connues mettent en oeuvre deux électrodes produisant un champ électrique orienté dans une seule direction. Ces techniques présentent l'inconvénient d'être limitées sous plusieurs aspects, ne permettant pas en particulier la résolution de molécules d'ADN de dimensions supérieures à 50 kilobases.

Des techniques plus récentes ont été mises au point, qui font appel à une multiplicité d'électrodes produisant des champs électriques générés alternativement dans des directions différentes. Ces techniques ont permis de séparer entre autres des molécules d'ADN de dimensions allant jusqu'à 2 mégabases, toutefois, elles présentent l'inconvénient majeur de générer un champ électrique non uniforme, si bien que l'ADN migre avec des mobilités et selon des trajectoires qui dépendent de l'emplacement dans le gel de l'échantillon à analyser. Il en résulte une difficulté non négligeable à comparer des échantillons entre eux, et la quasi-impossibilité d'obtenir des résultats reproductibles.

La présente invention permet de pallier ces inconvénients en proposant un procédé qui permet la séparation par électrophorèses de grosses macromolécules, en particulier de molécules d'ADN de dimensions allant jusqu'à 2 mégabases, tout en assurant la reproductibilité des résultats et la possibilité de comparer des échantillons entre eux.

La présente invention est basée sur la découverte que des électrodes multiples disposées à intervalles égaux sur le contour d'un polygone régulier et soumises, sous l'action de courants électriques d'intensité fixe, à la génération d'au moins deux champs électriques alternés dans au moins deux directions différentes, produisent un champ électrique uniforme dans la zone centrale dudit polygone, l'uniformité dudit champ avoisinant celle qui pourrait être obtenue à l'aide de deux électrodes parallèles infinies.

La présente invention a ainsi pour objet un procédé d'électrophorèse permettant la séparation des macromolécules de grandes dimensions, suivant lequel :

- on dispose à intervalles égaux, selon le contour d'un polygone régulier, des électrodes multiples;
- on place dans la zone centrale dudit polygone l'échantillon du produit renfermant lesdites molécules dans un milieu convenable;
- on soumet ledit produit à l'action d'au moins deux champs électriques uniformes générés alternativement dans au moins deux directions différentes par lesdites électrodes alimentées en courant électrique d'intensité fixe.

Selon un mode de mise en oeuvre préféré du procédé selon l'invention, les électrodes sont disposées sur le contour d'un hexagone régulier, à raison de quatre à six électrodes par côté, et situées à une distance du fond de la cuve telle qu'elles se trouvent approximativement au niveau du milieu de la hauteur de l'échantillon de gel renfermant les macromolécules, de façon que le champ électrique généré traverse cet échantillon avec une efficacité optimum.

Dans ce mode de réalisation préféré, les électrodes sont réparties en deux groupes "actifs" et un groupe "neutre", les groupes "actifs" étant chacun constitués de deux rangées d'électrodes opposées et étant soumis alternativement à l'action d'un courant électrique d'intensité fixe entrainant la génération de deux champs électriques, orientés dans deux directions différentes tandis que le groupe "neutre" est constitué des deux autres rangées d'électrodes, également opposées, et fixées à un potentiel déterminé de manière à assurer l'uniformité du champ électrique au centre de l'hexagone.

Pour assurer l'uniformité du champ au centre de l'hexagone, les électrodes "actives" doivent être toutes alimentées en un courant de même intensité, qui fixe également la différence de potentiel entre les électrodes "neutres", étant bien entendu que les deux groupes d'électrodes "actives" sont alimentés alternativement.

La présente invention a également pour objet un dispositif permettant la mise en oeuvre du procédé selon l'invention.

Le dispositif d'électrophorèse selon l'invention permet la séparation de macromolécules de grandes dimensions ; il comporte un couvercle, auquel se trouve fixé des colonnes porte-électrode supportant des électrodes disposées selon le contour d'un polygone régulier, alimentées en courant continu d'intensité fixe par leur extrémité supérieure et produisant au moins deux champs électriques uniformes, générés alternativement dans au moins deux directions différentes et une cuve supportant ledit couvercle et recevant l'échantillon du produit dans un milieu convenable et renfermant lesdites molécules, de telle façon que cet échantillon est dans la zone centrale dudit polygone.

L'extrémité horizontale se trouve située à une faible distance du fond de la cuve, lequel comporte, approximativement au centre du polygone régulier formé par les électrodes, un emplacement destiné à recevoir l'échantillon de gel renfermant les macromolécules à séparer, les électrodes étant reliées, à l'extérieur de la cuve, à des sources de courant électrique d'intensité fixe elles-mêmes reliées à des moyens permettant de les mettre sous tension alternative par groupe de deux rangées opposées.

Selon un mode de réalisation préféré du dispositif selon l'invention, les électrodes se trouvent disposées selon le contour d'un hexagone régulier, à raison de quatre à six électrodes par coté, à une distance du fond de la cuve telle qu'elles se trouvent approximativement au niveau du milieu de la hauteur de l'échantillon de gel renfermant les macromolécules.

Dans ce mode de réalisation préféré, les électrodes sont réparties en deux groupes "actifs" et un groupe "neutre", les groupes "actifs" étant chacun constitué de deux rangées d'électrodes opposées et étant soumis alternativement à l'action d'un courant électrique d'intensité fixe entrainant la génération du champ électrique, tandis que le groupe "neutre" est constitué des deux autres rangées d'électrodes, également opposées, fixées à un potentiel déterminé de manière à assurer l'uniformité du champ électrique dans la zone centrale de l'hexagone.

Les groupes "actifs" d'électrodes sont alimentés alternativement en un courant électrique d'intensité prédéterminée, selon des périodicités fixées à l'avance, et qui peuvent varier de quelques secondes à quelques minutes.

Les électrodes du dispositif selon l'invention se trouvent toutes reliées les unes aux autres par l'intermédiaire de résistances toutes égales, de maniére que la différence de potentiel entre deux électrodes voisines soit toujours la meme sur tout le contour du polygone, ce qui a pour effet de générer entre les deux rangées d'électrodes "neutres" un champ électrique de même intensité que celui généré entre les deux rangées opposées d'un même groupe d'électrodes "actives".

En raison de la configuration polygonale de l'ensemble d'électrodes, les champs électriques générés alternativement par chacun des groupes d'électrodes "actives" ont des directions différentes, pouvant faire entre elles un angle de 120 , dans le cas où le polygone est un hexagone.

Cette caractéristique, ainsi que la présence du groupe d'électrodes "neutres", permet d'assurer l'uniformité du champ électrique dans la zone centrale du polygone.

Les électrodes mises en oeuvre dans le dispositif selon l'invention peuvent être des électrodes de graphite ou des électrodes métalliques. Dans ce dernier cas, elles sont avantageusement constituées d'un fil d'un métal peu oxydabie, de préférence, un fil de platine en forme de "L", dont la partie horizontale est placée à une courte distance du fond de la cuve.

Selon un mode de réalisation préféré du dispositif selon l'invention, les électrodes sont constituées d'un fil de platine supporté par des colonnes porte-électrodes réalisées dans une matière plastique telle que le plexiglas, fixées au couvercle de la cuve par tout moyen approprié.

Les électrodes sont insérées dans un logement prévu à cet effet dans lesdites colonnes, chaque électrode étant fixée par son extrémité supérieure à une fiche électrique, elle-meme fixée dans le couvercle de la cuve, à l'intérieur duquel elle est reliée à un dispositif électronique assurant son alimentation en courant électrique. La partie horizontale active de chaque électrode, se trouve située immédiatement en-dessous de la colonne, laquelle présente avantageusement à sa base, un évidement prolongé à sa partie supérieure par un conduit latéral débouchant à l'extérieur de la colonne, afin de permettre l'évacuation progressive des bulles gazeuses qui apparaissent, au cours de l'électrophorèse, à la surface du fil de platine.

Afin d'assurer la bonne fixation de l'électrode, son extrémité inférieure peut être insérée dans un logement prévu à cet effet, dans la colonne, au-delà de l'évidement dont il vient d'être question.

Les deux groupes d'électrodes "actives" sont reliés à l'extérieur de la cuve, à un circuit électrique comportant tous les éléments nécessaires à leur alimentation en courant électrique, ces connexions pouvant se faire par l'intermédiaire d'un ensemble électronique programmé pour contrôler les opérations.

L'électrophorèse peut être conduite, au moyen du dispositif qui vient d'être décrit, en milieu tampon de type connu, et en mettant en oeuvre un gel approprié, de type également connu, renfermant l'échantillon à analyser.

Le dispositif selon l'invention va être maintenant décrit en détail par référence aux dessins annexés qui en représentent une réalisation, étant bien entendu que cette description ne présente aucun caractère limitatif.

Parmi les dessins annexés :

La figure 1 représente une demi-coupe d'une cuve à électrophorèse selon l'invention.

La figure 2 représente une vue de dessous du couvercle de la cuve.

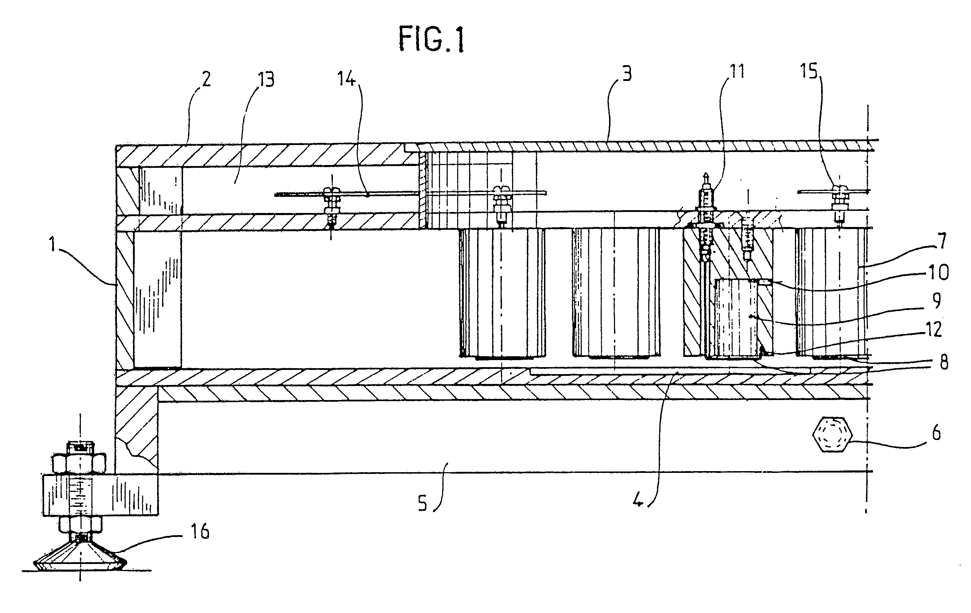

En se référant à la figure 1, on voit que la cuve 1 se compose d'un bac surmonté d'un couvercle 2 présentant en son centre une partie 3 transparente permettant de contrôler les manipulations. Un évidement 4 est ménagé dans le fond du bac 1, approximativement en son centre, pour recevoir le porte-échantillon portant le gel renfermant le produit à analyser.

Un réservoir 5 situé en-dessous du bac 1 est relié à une pompe et un cryostat non représentés permet d'assurer la circulation dans le bac 1 du liquide tampon de refroidissement, qui entre dans le réservoir 5 par une douille d'entrée 6 et en ressort par une douille de sortie non représentée, située de l'autre côté de la cuve.

Sur le couvercle 2 se trouvent fixées, au moyen de vis 6, les colonnes porte-électrodes 7 supportant les électrodes 8 en fil de platine. Un évidement 9 à la base des colonnes 7 permet d'évacuer par le conduit 10 les bulles de gaz qui se forment autour des életrodes 8 au cours de l'opération d'électrophorèse.

L'électrode 8 est fixée par sa partie supérieure à une fiche électrique mâle 11 tandis que sa partie inférieure, recourbée à son extrémité, est maintenue dans un logement 12 ménagé dans la colonne 7.

Les électrodes 8 sont toutes situées dans le meme plan horizontal, à une distance du fond du bac 1 telle qu'elles arrivent au niveau du milieu de la hauteur de l'échantillon de gel placé dans l'évidement 4. Ainsi, avec un échantillon de gel de 8 mm de haut, les électrodes 8 doivent être à 4mm du fond de la cuve. Cette précision est importante pour assurer l''efficacité optimum de l'électrophorèse.

Le couvercle 2 comporte un évidement 13 permettant de loger les connexions électriques raccordées aux électrodes 8 ainsi que l'ensemble électronique contrôlant l'électrophorèse et disposé sur des circuits imprimés 14 fixés au couvercle 2 par des vis 15.

L'ensemble de la cuve est monté sur trois pieds 16 permettant le réglage de l'horizontalité.

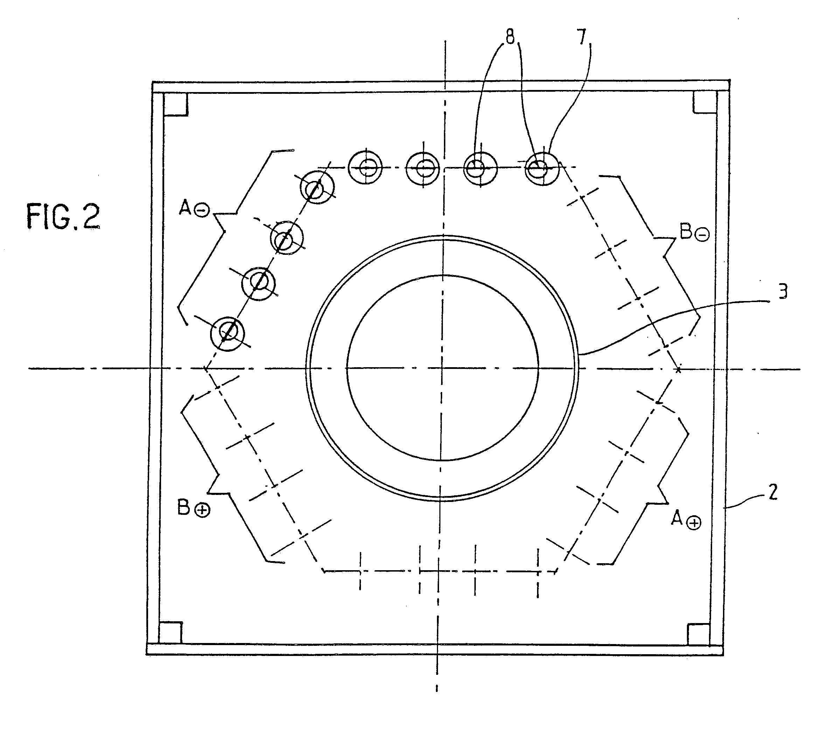

En se référant maintenant à la figure 2, on voit la disposition des colonnes porte-électrodes 7 sur le couvercle 2, selon le contour d'un hexagone, dont chaque côté porte quatre électrodes.

Les électrodes sont réparties en deux groupes d'électrodes actives A+ A-, B+ B- et un groupe d'électrodes neutres, non désigné sur le dessin.

Les groupes A+ A- et B+ B- sont alimentés alternativement en courant électrique, générant un champ électrique orienté alternativement entre A+ et A- et entre B+ et B-, ces deux directions faisant entre elles un angle de 120 .

L'électrophorèse est réalisée, dans le dispositif qui vient d'être décrit, après que le porte-échantillon, convenablement chargé de gel renfermant le produit à analyser, ait été placé dans l'évidement 4 destiné à le recevoir. Le liquide tampon de refroidissement, refroidi à 9 C, est mis en circulation dans le bac I, de manière à recouvrir l'échantillon. Les raccordements électriques étant réalisés entre les électrodes "actives" et les sources de courant, l'ensemble est placé sous contrôle du dispositif électronique disposé sur les circuits imprimés 14, qui régit l'alternance d'alimentation des électrodes par un courant d'intensité fixe.

Le procédé et le dispositif selon l'invention permettent, ainsi qu'il a déjà été dit, de séparer des macromolécules de grandes dimensions, telles que des génones de type humain ou des chaînes d'ADN de levures. La méthode se distingue par la qualité de la résolution et la linéarité de la migration, qui facilite considérablement la lecture des résultats.

**Revendications**

1. Procédé d'électrophorèse permettant la séparation des macromolécules de grandes dimensions, suivant lequel:
- on dispose à intervalles égaux, selon le contour d'un polygone régulier, des électrodes multiples;
on place dans la zone centrale dudit polygone l'échantillon du produit renfermant lesdites molécules dans un milieu convenable;
- on soumet ledit produit à l'action d'au moins deux champs électriques uniformes générés alternativement dans au moins deux directions différentes par lesdites électrodes alimentées en courant électrique d'intensité fixe.

2. Procédé selon la revendication 1, dans lequel on répartit lesdites électrodes en deux groupes dont l'un, constitué d'au moins deux couples de rangées opposées, est soumis à l'alternance d'alimentation en courant électrique et l'autre, constitué d'au moins un couple de rangées opposées est fixé à un potentiel déterminé.

3. Procédé selon l'une quelconque des revendications 1 ou 2, dans lequel on dispose lesdites électrodes selon le contour d'un hexagone régulier à raison de quatre à six électrodes par côté.

4. Dispositif d'électrophorèse permettant la séparation de macromolécules de grandes dimensions, comportant un couvercle (2), auquel se trouve fixées des colonnes porte-électrodes (7) supportant les électrodes (8), disposées selon le contour d'un polygone régulier, alimentées en courant continu d'intensité fixe par leur extrémité supérieure et produisant au moins deux champs électriques uniformes générés alternativement dans au moins deux directions différentes et une cuve (1) supportant ledit couvercle et recevant l'échantillon du produit dans un milieu convenable et renfermant lesdites molécules de telle façon que cet échantillon est dans la zone centrale dudit polygone.

5. Dispositif selon la revendication 4, dans lequel les électrodes (8) sont situées à une distance du fond de la cuve telle qu'elles se trouvent approximativement au niveau du milieu de la hauteur de l'échantillon de gel renfermant les macromolécules.

6. Dispositif selon l'une quelconque des revendications 4 ou 6, dans lequel les électrodes sont réparties en deux groupes "actifs" et un groupe "neutre", les groupes "actifs" étant chacun constitués de deux rangées d'électrodes opposées et étant soumis alternativement à l'action d'un courant électrique d'intensité fixe, entraînant la génération du champ électrique, tandis que le groupe "neutre" est constitué de deux autres rangées d'électrodes, également opposées, fixées à un potentiel déterminé, les groupes "actifs" d'électrodes étant alimentés alternativement en un courant électrique d'intensité prédéterminé, selon des périodicités fixées à l'avance.

7. Dispositif selon l'une quelconque des revendications 5 ou 6, dans lequel les colonnes porte-électrodes (7) comportent à leur partie inférieure un évidement (9) prolongé à sa partie supérieure par un conduit assurant l'évacuation progressive des bulles de gaz qui apparaissent sur l'électrode au cours de l'électrophorèse.

8. Dispositif selon l'une quelconque des revendications 4 à 7, dans lequel l'alimentation en courant électrique des électrodes (8) est contrôlée par un ensemble électronique disposé sur des circuits imprimés (14), situés à l'intérieur d'un évidement ménagé dans le couvercle.

9. Dispositif selon l'une quelconque des revendications 4 à 8, dans lequel la cuve comporte à sa partie inférieure, un réservoir (5) destiné à assurer la circulation dans la cuve d'un liquide tampon de refroidissement qui vient recouvrir l'échantillon de produit.

10. Dispositif selon l'une quelconque des revendications 4 à 9, dans lequel lesdites électrodes sont réalisées en graphite ou en métal.

11. Dispositif selon l'une quelconque des revendications 4 à 10, dans lequel ledit polygone régulier est un hexagone rfégulier sur le contour duquel sont disposées les électrodes à raison de 4 à 6 par côté.

# FIG.1

EP 0 307 332 A2

FIG.2

A⊖
B⊖
3
B⊕
A⊕
2
8
7

EP 0 307 332 A2